(19)

**Europäisches Patentamt**
**European Patent Office**
**Office européen des brevets**

(11) **EP 4 430 331 B1**

(12) **EUROPÄISCHE PATENTSCHRIFT**

(45) Veröffentlichungstag und Bekanntmachung des Hinweises auf die Patenterteilung:
**05.11.2025   Patentblatt 2025/45**

(21) Anmeldenummer: **22817634.3**

(22) Anmeldetag: **11.11.2022**

(51) Internationale Patentklassifikation (IPC):
**F16K 37/00** *(2006.01)*

(52) Gemeinsame Patentklassifikation (CPC):
**F16K 37/0041; F16K 37/0083**

(86) Internationale Anmeldenummer:
**PCT/EP2022/081640**

(87) Internationale Veröffentlichungsnummer:
**WO 2023/084034 (19.05.2023 Gazette 2023/20)**

(54) **SENSORVORRICHTUNG, MESSANORDNUNG UND VERFAHREN ZUR MONTAGE EINER SENSORVORRICHTUNG**

**SENSOR DEVICE, MEASURING ARRANGEMENT, AND METHOD FOR ASSEMBLING A SENSOR DEVICE**

**DISPOSITIF CAPTEUR, AGENCEMENT DE MESURE, ET PROCÉDÉ D'ASSEMBLAGE D'UN DISPOSITIF CAPTEUR**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **12.11.2021   DE 102021129496**

(43) Veröffentlichungstag der Anmeldung:
**18.09.2024   Patentblatt 2024/38**

(73) Patentinhaber: **Samson Aktiengesellschaft**
**60314 Frankfurt am Main (DE)**

(72) Erfinder: **KOLBENSCHLAG, Stefan**
**64291 Darmstadt (DE)**

(74) Vertreter: **Schmid, Nils T.F.**
**SKM-IP PartGmbB**
**Oberanger 45**
**80331 München (DE)**

(56) Entgegenhaltungen:
**DE-B3- 102020 113 437     US-A1- 2003 086 470**
**US-A1- 2017 082 467**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Sensorvorrichtung für ein Stellventil einer prozesstechnischen Anlage, wie eine Chemieanlage, ein Kraftwerk, eine lebensmittelverarbeitende Anlage, oder dergleichen. Die Erfindung betrifft auch eine Messanordnung mit einer Sensorvorrichtung für ein Stellventil mit einer Stellstange und einer Stützstruktur. Ferner betrifft die Erfindung ein Verfahren zur Montage einer Sensorvorrichtung an einem Stellventil.

Stellventile werden prozesstechnischen Anlagen im Allgemeinen dazu eingesetzt, um eine Prozessfluidströmung einzustellen. Abhängig von Prozessgrößen, Störgrößen und Umgebungsgrößen kann die Prozessfluidströmung verschiedene Eigenschaften aufweisen, auf die mit dem Stellventil Einfluss genommen werden kann, um stromaufwärts oder stromabwärts des Stellventils eine Annäherung an oder Identität mit gewünschten Eigenschaften der Prozessfluidströmung zu bewirken. Die Eigenschaften der Prozessfluidströmung betreffen beispielsweise deren Druck, Volumenstrom, Temperatur, Zusammensetzung oder Ähnliches. Zu diesem Zweck verfügt das Stellventil über eine mittels einem Ventilglied verschließbare Durchgangsöffnung. Viele Stellventile haben eine Durchgangsöffnung, die von einem Ventilsitz eingerahmt ist, und ein auf den Ventilsitz formkomplementär abgestimmtes, bewegliches Ventilglied, wobei eine Relativstellung des Ventilglieds in Bezug auf den Ventilsitz eine oder mehrere Eigenschaften der Prozessfluidströmung beeinflusst. Bei vielen Stellventilen kann ein vollständig geschlossener Zustand eingestellt werden, bei dem sich das Ventilglied in einem abdichtenden Berührkontakt mit dem Ventilsitz befindet. Übliche Stellventile sind dazu ausgelegt, das Ventilglied in einer Vielzahl verschiedener geöffneter Stellungen relativ zu dem Ventilsitz zu positionieren, sodass eine Vielzahl unterschiedlich großer Öffnungsweiten einstellbar ist. Die Betätigung des Ventilglieds erfolgt im Allgemeinen über eine linearbewegliche Stellstange, die fest mit dem Ventilglied verbunden ist. Die Stellstange erstreckt sich aus dem fluidführenden Ventilgehäuse hinaus durch ein Joch oder ähnliches zu einem Stellaktor, der beispielsweise pneumatisch, hydraulisch oder elektrisch wirken kann. Der Stellaktor prägt der Stellstange eine Stellbewegung auf, welche durch die Stellstange auf das Stellglied übertragen wird. Die Einstellung der Prozessfluidströmung und damit des Prozesses erfolgt mittels dem Stellventil dadurch, dass eine optimale Schließ- oder Öffnungs-Relativstellung des Ventilgliedes bezüglich des Ventilsitzes präzise erreicht wird. Stellventile umfassen zur präzisen Ventilglied-Positionierung üblicherweise elektronische Stellungsregler, die Positionssignale von einem Positionssensor empfangen, um den Stellaktor ansteuern, der die Stellstange und damit das Stellglied bewegt. Besonders relevant ist die Präzision der Stellungsregelung im Bereich der Schließstellung des Stellventils. Der Positionssensor erzeugt das Positionssignal üblicherweise auf Basis einer Referenzstelle der Stellstange. Die Genauigkeit der Stellungsregelung hängt von der Genauigkeit der Erfassung der Position der Antriebsstange ab. Die Auflösung der Sensorik spielt hierbei eine große Rolle.

DE 38 44 020 A1 beschreibt einen Wegsensor zum Erfassen eine geradlinigen Hubbewegung der Antriebsstange eines Aktuators eines Ventilantriebs. Der Wegsensor verwendet einen zwischen zwei stationären Magnetpolen angeordneten Hall-Sensor. Der Hall-Sensor ist am Drehpunkt eines Hebels befestigt, dessen bewegliches Ende mit einem Abtaststift ausgestattet ist, der sich an einem ortsfest an der Stellstange gehaltenen Mitnehmer abstützt. Der Mitnehmer hat eine senkrecht zu Hubrichtung der Stellstange ausgerichtete Gleitfläche, an der der Abtaststift durch eine Federvorspannung gehalten ist. Während die Stellstange eine lineare Hubbewegung vollführt, verbleibt der Abtaststift in Bezug auf die Hubrichtung konstant am Mitnehmer und schwenkt dabei um den Drehpunkt, sodass mit dem Hall-Sensor ein das Stellventil betreffendes Weg- bzw. Position-Signal für einen Stellungsregler erzeugt werden kann. Während der Schwenkbewegung gleitet der Abtaststift quer zur Hubrichtung entlang der Gleitfläche.

Einen anderen Winkelsensor für ein Stellventil beschreibt US 2003/0086470 A1. Bei diesem Winkelsensor ist ein Referenzstift fest mit der Stellstange verbunden. Der Hebel des Winkelsensors hat eine Aufnahmenut für den Referenzstift. Bei einer linearen Hubbewegung der Stellstange nimmt der Referenzstift den Hebel mit, wobei eine Relativbewegung des Referenzstifts in Bezug auf die Längsrichtung des Hebels innerhalb der Aufnahmenut einhergeht. Am Hebel befestigt sind Magnetpole, die sich entsprechend dem Hebel um dessen Drehpunkt mit bewegen. Der Winkelsensor verwendet ein stationäres magnetoresistives Element zum Erzeugen eines Positionssignals.

DE 42 33 300 C1 und EP 2 061 984 B1 beschreiben verschiedene Positionssensoren, bei denen die Hubbewegung der Stellstange eines Stellventils mittels eines Drehhebels abgenommen wird, der gemeinsam mit einem Wipphebel um eine ortsfeste Achse drehbar gelagert ist, wobei die Sensorik mit dem Wipphebel interagiert. Durch den Wipphebel kann der Hubweg in mit erhöhter Auflösung bestimmt werden.

Der Hebelweg ist im Allgemeinen mechanisch auf etwa 60 ° beschränkt. Die Amplitude der Gleitbewegung des Abtast- oder Referenzstifts steigt mit größer werdendem Hubweg überproportional an. Dies kann zur Folge haben, dass an Stellventilen mit großem Hubweg für konventionelle Positionssensoren ein sehr langer Hebel und dadurch unter Umständen ein inakzeptabel großer Bauraum erforderlich würde. Mit zunehmender Amplitude der Gleitbewegung wird außerdem die Position-Messgenauigkeit beeinträchtigt.

DE 10 2020 113 437 B3 offenbart ein Verfahren zum Erfassen von Schwingungen und/oder Schlägen, denen ein Stellventil z.B. in einer prozesstechnischen Anlage ausgesetzt sein kann.

Es kann als eine Aufgabe der Erfindungen gesehen werden, die Nachteile des Stands der Technik zu überwinden, insbesondere einen Positionssensor für ein Stellgerät bereitzustellen, welcher für einen großen linearen Hubweg, insbesondere zumindest abschnittsweise, vorzugsweise bei der Schließstellung, eine hohen Messgenauigkeit bereitstellen kann und/oder einen vergleichsweise geringen Bauraumbedarf.

Diese Aufgabe lösen die Gegenstände der angehängten Ansprüche.

Demnach ist eine Sensorvorrichtung für ein Stellventil einer prozesstechnischen Anlage vorgesehen, wie eine Chemieanlage, ein Kraftwerk, eine lebensmittelverarbeitende

Anlage oder dergleichen. Das Stellventil kann beispielsweise ein Hub-Stellventil sein, welches einen insbesondere linearbeweglichen Aktor zum Betätigen eines linearbeweglichen Stellglieds des Stellventils aufweist. Das linearbewegliche Stellglied des Stellventils kann beispielsweise ein Ventilkegel oder dergleichen sein, welcher translatorisch in einer Hubrichtung relativ zu einem zu dem Stellglied korrespondierenden Ventilsitz beweglich ist. Vorzugsweise sind das Stellglied und der Ventilsitz derart auf einander abgestimmt, dass das Ventilglieds den Ventilsitz verschließen kann (Schließstellung). Stellventile können in Relation zwischen einer Schließrichtung des Stellglieds zu einer vorbestimmten Fließrichtung des Prozessfluids, auf welches das Stellventil einwirkt, als "Flow to Close" (FTC) oder "Flow to Open" (FTO) benannt sein. Alternativ kann durch die Betätigung des Stellaktors des Stellventils das Stellglied mittels der Hubstange oder Stellstange in einem vorzugsweise vorbestimmten und/oder wählbaren Abstand zu dem Ventilsitz positioniert werden. Der Abstand des Stellglieds relativ zum Ventilsitz bestimmt eine Durchflussfläche des Stellventils. Das Stellventil ist fest mit der Stellstange verbunden. Eine lineare Stellbewegung des Stellventils korrespondiert zu einer entsprechenden, insbesondere gleichen, Hubbewegung der Stellstange. Durch Einstellung des Abstands zwischen Stellglied und Ventilsitz kann mithilfe des Stellventils eine Druckdifferenz zwischen Stellventil-Eingang und Stellventil-Ausgang, ein Volumenstrom durch das Stellventil oder dergleichen einstellbar sein. Der Stellaktor des Stellventils kann beispielsweise ein elektrischer, pneumatischer oder hydraulischer Stellaktor sein. Es sind einfach wirkende oder doppelt wirkende Stellaktoren für Stellventile bekannt.

Die Sensorvorrichtung umfasst einen Positionssensor und einen Hebelarm zum Umwandeln einer linearen Hubbewegung einer Stellstange des Stellventils in eine korrespondierende, am Positionssensor abgebildete Transmissionsbewegung. Der Hebelarm ist um einen ortsfesten Drehpunkt der Sensorvorrichtung rotationsbeweglich. Insbesondere ist der Hebelarm dazu ausgelegt und eingerichtet, die Hubbewegung in eine rotatorische Transmissionsbewegung um zu wandeln.

Erfindungsgemäß ist vorgesehen, dass der Hebelarm eine Kopplung zur positionstreuen rotationsbeweglichen Verbindung des Hebelarms mit einer Referenzstelle der Stellstange aufweist. Die Kopplung ist bezüglich der Referenzstelle der Stellstange positionstreu. Der Hebelarm umfasst zumindest einen ersten Hebelabschnitt und zumindest einen relativ zum ersten Hebelabschnitt beweglichen zweiten Hebelabschnitt. Der erste Hebelabschnitt ist vorzugsweise nahe dem Drehpunkt angeordnet, vorzugsweise am Drehpunkt gelagert. Der zweite Hebelabschnitt ist vorzugsweise mit der Kopplung ausgestattet und mit der Referenzstelle der Stellstange verbunden oder verbindbar. Der erste Hebelabschnitt kann im Allgemeinen näher an dem Drehpunkt angeordnet sein als der zweite Hebelabschnitt und folglich als proximaler Hebelabschnitt bezeichnet sein. Der zweite Hebelabschnitt kann im Allgemeinen in Relation zum ersten Hebelabschnitt weiter entfernt vom Drehpunkt angeordnet und folglich als distaler Hebelabschnitt bezeichnet sein. Die zwei- oder mehrteilige Ausgestaltung des Hebelarms der erfindungsgemäßen Sensorvorrichtung gestattet es, den Hebelarm sowohl positionstreu mit der Referenzstelle der Stellstange zu verbinden als auch um einen ortsfesten Drehpunkt der Sensorvorrichtung rotationsbeweglich zu lagern. Die Beweglichkeit der Hebelabschnitte relativ zueinander ist vorzugsweise kinematisch eindeutig definiert. Vorzugsweise ist vorgesehen, dass jeder Stellung des ersten Hebelabschnitts eindeutig eine korrespondierende Stellung des zweiten Hebelabschnitts zuordenbar ist. Entlang des Stellweges der Stellstange von einer ersten Extremstellung, beispielsweise der Schließstellung, zu einer zweiten Extremstellung, beispielsweise der maximalen Öffnungsstellung, absolvieren der erste Hebelabschnitt und der zweite Hebelabschnitt eine jeweilige Hebelabschnittsbewegung, wobei vorzugsweise jeder Stellung der Stellstange eindeutig eine bestimmte Stellung des ersten Hebelabschnitts und/oder eine bestimmte Stellung des zweiten Hebelabschnitts zugeordnet werden kann. Insbesondere kann eine eindeutig definierte Beweglichkeit des ersten Hebelabschnitts relativ zu dem zweiten Hebelabschnitt bereitgestellt sein. Die Beweglichkeit des ersten Hebelabschnitts relativ zum zweiten Hebelabschnitt ist vorzugsweise spielarm und/oder reibungsarm. Vorzugsweise ist die Sensorvorrichtung derart auf das Stellventil abgestimmt, dass eine eindeutig definierte Beweglichkeit des ersten Hebelabschnitts und/oder des zweiten Hebelabschnitts in Relation zur Stellung der Referenzstelle gewährleistet ist. Durch die mehrteilige Ausgestaltung des Hebelarms mit zueinander beweglichem ersten und zweiten Hebelabschnitt lässt sich selbst mit einer kompakt gebauten Sensorvorrichtung eine präzise Messung, insbesondere im Schließbereich, in Kombination mit einem großen Meßweg erreichen.

Gemäß der erfindungsgemäßen Sensorvorrichtung ist der erste Hebelabschnitt relativ zu dem zweiten Hebelabschnitt in einer durch den Drehpunkt und die Referenzstelle festgelegten Translationsrichtung translationsbeweglich. Vorzugsweise ist die Referenzstelle ortsfest an einer Hubstange des Stellventils. Unabhängig von der gegenwärtigen Stellung der Stellstange erfolgt die Bewegung der Hebelabschnitte relativ zueinander stets translatorisch, insbesondere ausschließlich translatorisch. Es kann vorgesehen sein, dass der Hebelarm aus wenigstens zwei, genau zwei oder mehr, insbesondere ausschließlich, translatorisch zueinander beweglichen Hebelabschnitten besteht. Ein schwenkbeweglicher Hebelarm, der zwei oder mehr translatorisch zueinander bewegliche Hebelabschnitte aufweist, kann dazu ausgelegt und eingerichtet sein, eine lineare Hubbewegung der Stellstange umzuwandeln in eine vorzugsweise rotatorische Transmissionsbewegung am Positionssensor. Für die Sensorvorrichtung an prozesstechnischer Anlage kann die Abbildung der linearen Hubbewegung der Stellstange als eine korrespondierende rotatorische Transmissionsbewegung am Positionssensor insbesondere in Kombination mit magnetoresistiven Sensoren besonders zweckmäßig sein.

Bei einer zweckmäßigen Weiterbildung einer erfindungsgemäßen Sensorvorrichtung ist vorgesehen, dass der erste Hebelabschnitt relativ zu dem zweiten Hebelabschnitt eine Teleskophülse, insbesondere als ersten Hebelabschnitt, und eine in der Teleskophülse translatorisch geführte Teleskopstange, insbesondere als zweiten Hebelabschnitt, aufweist. Alternativ kann der erste Hebelabschnitt eine Teleskopstange bilden, die innerhalb des als Teleskophülse realisierten zweiten Hebelabschnitts geführt ist. Insbesondere haben die Teleskophülse und die Teleskopstange zueinander formkorrespondierende Querschnitte. Vorzugsweise sind die Teleskophülse und die Teleskopstange gemäß einer Gleitpassung oder einer Spielpassung aufeinander abgestimmt. Beispielsweise kann die Teleskophülse wenigstens eine Gleitbuchse umfassen oder daraus bestehen, beispielsweise eine Gleitlagerbuchse umfassend oder bestehend aus einem Kunststoff, Messing, Bronze, Messing-Bronze und/oder einem Schichtverbund-Material, wie DU®. Ein Gleitlager-Schichtverbund-Material kann beispielsweise zusammengesetzt sein aus einer Laufschicht, insbesondere aus einem Kunststoff, vorzugsweise PTFE, und/oder einem weichen Metall, wie Blei, gegebenenfalls einer porösen Schicht, z.B. aus Metall, insbesondere Bronze, einer Tragschicht, insbesondere aus Metall, vorzugsweise umfassend oder bestehend aus Stahl, und/oder einer Korrosionsschutzschicht, beispielsweise umfassend oder bestehend aus Zinn. Die Teleskophülse realisiert vorzugsweise eine Linearführung für die Teleskopstange. Alternativ oder zusätzlich kann die Teleskophülse ein Kugelumlauf-Linearlager umfassen oder daraus bestehen. Es kann zweckmäßig sein, die Teleskophülse mit einer kürzeren Längserstreckung auszubilden als die Teleskopstange, wobei insbesondere die Längserstreckung der Teleskophülse und der Teleskopstange derart aufeinander abgestimmt sind, dass unabhängig von der Hubstellung der Referenzstelle stets wenigstens ein Teil, insbesondere wenigstens ein Großteil (d. h. wenigstens 50 % der Längserstreckung), der Teleskophülse, vorzugsweise die gesamte Längserstreckung der Teleskophülse, mit der Teleskopstange belegt ist.

Gemäß einer Ausführung der Sensorvorrichtung ist der erste Hebelabschnitt starr mit einem Drehgelenk zur Drehung um den Drehpunkt verbunden. Alternativ oder zusätzlich ist gemäß einer Ausführung der Sensorvorrichtung der zweite Hebelabschnitt starr mit der Kopplung verbunden. Die an der Referenzstelle vorgesehene Kopplung vollführt die Hubbewegung entsprechend der gegenwärtigen Hubstellung der Stellstange. Am oder nahe dem Drehpunkt kann die die Hubbewegung abbildende Transmissionsbewegung durch den Positionssensor der Sensorvorrichtung erfasst werden. Bei einer bevorzugten Ausführung ist der Hebelarm sowohl einerseits starr, insbesondere drehfest, mit der Kopplung als auch starr, insbesondere drehfest, mit dem Drehgelenk verbunden, wobei die Beweglichkeit der Hebelabschnitte zueinander dazu ausgelegt und eingerichtet ist, einen Längenausgleich des Hebelarms während einer linearen Stellbewegung der Stellstange in Relation zum Drehpunkt zu gewährleisten. Eine starre, drehfeste Verbindung wenigstens eines Hebelabschnitts an die Kopplung, insbesondere die Stellstange, und/oder das Drehgelenk fördert die hohe Präzision der Messung.

Bei einer anderen Ausführungsform einer Sensorvorrichtung, die mit den vorigen kombinierbar ist, weist der Hebelarm zumindest einen die Relativstellung des ersten Hebelabschnitts in Bezug auf den zweiten Hebelabschnitt repräsentierenden Indikator auf. Der Indikator kann beispielsweise realisiert sein durch eine Skala am ersten und/oder zweiten Hebelabschnitt, insbesondere der Teleskopstange. Der Indikator kann in Kombination mit translatorisch zu einander beweglichen Hebelabschnitten eine Längenangabe, beispielsweise betreffend die Gesamtlänge des Hebels oder betreffend die translatorisch verfahrene Länge eines Hebelabschnitts in Bezug den anderen Hebelabschnitt, repräsentieren. Ein derartiger Indikator kann ein manuelles Ablesen gestatten, beispielsweise zum Zwecke der Initialisierung und/oder Kalibrierung der Sensorvorrichtung.

Bei einer Sensorvorrichtung ist gemäß einer Ausführung vorgesehen, dass der Hebelarm von einer Hülle, wie einem Balg, beispielsweise einem Ziehharmonikabalg, insbesondere aus Gummi oder einem Elastomer, umgeben ist. Die Hülle erstreckt sich zumindest abschnittsweise in der Translationsrichtung entlang dem Hebelarm, wobei insbesondere die Hülle den Hebelarm vollumfänglich umgibt und/oder in der Translationsrichtung größtenteils, insbesondere zu wenigstens 50 %, vorzugsweise wenigstens 66 %, besonders bevorzugt wenigstens 75 % umgibt. Alternativ oder zusätzlich ist die Hülle korrespondierend zur Relativstellung des ersten Hebelabschnitts in Bezug auf den zweiten Hebelabschnitt verformbar. Beispielsweise kann die Hülle in Translationsrichtung verformbar und im Bereich des Drehpunkts fest mit dem ersten Hebelabschnitt sowie im Bereich der Referenzstelle fest mit dem zweiten Hebelabschnitt verbunden sein.

Bei einer Ausführung der Sensorvorrichtung umfasst der Hebelarm drei oder mehr relativ zueinander bewegliche, insbesondere translationsbewegliche, insbesondere in der Translationsrichtung translationsbewegliche, Hebelabschnitte. Vorzugsweise besteht der Hebelarm aus mehreren in der Translationsrichtung relativ zueinander beweglichen Hebelabschnitten. Der Hebelarm kann beispielsweise als mehrgliedrige Teleskop-Hebelarm realisiert sein, welcher mehrere ineinander verschachtelte Teleskop-Stangen- und/oder -Hülsen-Glieder umfasst. Besonders für große Stellventile kann eine mehrgliedrige Ausführung des Hebelarms zweckmäßig sein, wenn beispielsweise ein großer linearer Stellweg mit der Sensorvorrichtung erfasst werden soll, jedoch gleichzeitig nur ein geringer Abstand zwischen der Stellstange und dem Positionssensor quer zur Hubrichtung bereitsteht, der insbesondere kleiner ist als die Hälfte des Stellwegs.

Insbesondere umfasst bei einer Ausführung der Sensorvorrichtung die Kopplung ein Kugelgelenk oder ein Drehgelenk. Ein Drehgelenk kann für eine besonders präzise Übertragung der Stellung und/oder Bewegung vorgesehen sein und ein Kugelgelenk kann vorgesehen sein, um Toleranz bereitzustellen für beispielsweise thermische Verformungen oder unterschiedliche Einbaukonstellationen. Ein Kugelgelenk oder ähnliches kann beispielsweise eventuelle Drehbewegungen der Ventilstange um ihre Hubachse ausgleichen.

Bei einer zweckmäßigen Ausführung umfasst die Sensorvorrichtung eine Sensorelektronik, die mit dem, insbesondere magnetoresistiven, Positionssensor verbunden ist. Die Sensorelektronik ist vorzugsweise dazu ausgelegt und eingerichtet, einen linearisierten Ausgabewert basierend auf der von dem Positionssensor erfassten, insbesondere rotatorischen, Transmissionsbewegung zu bestimmen. Insbesondere ist die Sensorelektronik dazu ausgelegt und eingerichtet, eine Winkel-Bestimmung in Bezug auf eine rotatorische Transmissionsbewegung, beispielsweise unter Zuhilfenahme einer geometrischen Funktion, wie einer Arkustangensfunktion, Arkussinusfunktion, oder Arkuscosinusfunktion, durchzuführen und anschließend eine systematische Linearitätsanpassung durchzuführen. Alternativ kann die Sensorelektronik dazu ausgelegt und eingerichtet sein, eine Winkel-Bestimmung in Bezug auf eine rotatorische Transmissionsbewegung unter Verwendung einer linearitätsangepassten Winkeltabelle, wie einer Arkustangenstabelle, durchzuführen. Mit einer Linearitätsanpassung kann im Allgemeinen die Umrechnung eines Positionssensor-signals, wie eines xMR sinus- oder cosinus-Signals, in ein lineares Winkelsignal bezeichnet werden. Bei einem mit der Sensorvorrichtung kooperierenden Stellventil kann eine Stellungsreglerelektronik vorgesehen sein, welche dazu ausgelegt und eingerichtet ist, den Stellaktor in Abhängigkeit von einem durch die Sensorvorrichtung erfassten Stellungs-ist-Wert zu betätigen. Insbesondere kann die Stellungsreglerelektronik zum empfangen von Stellung-ist-Werten von der Sensorelektronik mit einem Signaleingang, wie einem Analog-Digital-Wandler, ausgestattet sein. Insbesondere kann die Stellungsreglerelektronik dazu ausgelegt und eingerichtet sein, ein analoges Stromsignal an einem Signaleingang zu erfassen, welches einen Stellungs-ist-Wert repräsentiert. Besonders bevorzugt kann eine Stellungsreglerelektronik vorgesehen sein, welche dazu ausgelegt eingerichtet ist, ein lineares, insbesondere analoges Signal, vorzugsweise Stromsignal, repräsentieren einen Stellung-ist-Wert zu empfangen und diesen zur Betätigung des Stellaktors zu berücksichtigen. Dadurch soll bei Stellungsregler seitig eine Kompatibilität mit verschiedenen Positionssensoren gewährleistet sein. Die Sensorelektronik kann dazu ausgelegt und eingerichtet sein, ein Signal, vorzugsweise ein analoges Signal, insbesondere ein analoges Stromsignal, bereitzustellen, welches einen Stellung-ist-Wert repräsentiert. Indem die Sensorelektronik zur Ausgabe eines linearisierten Ausgabewerts ausgelegt und eingerichtet ist, welcher einen Stellung-ist-Wert repräsentiert, kann eine Kompatibilität der Sensorelektronik mit verschiedensten Stellungsreglern unterstützt werden. Insbesondere kann es vorgesehen sein, dass die Sensorelektronik in eine Elektronik, insbesondere eine Stellungsreglerelektronik, des Stellventils integriert ist. Konventionelle Sensorvorrichtungen verfügen nicht über eine systematische Linearitätsanpassung. Es hat sich überraschenderweise als vorteilhaft hinsichtlich der Messgenauigkeit erwiesen, in Kombination mit dem Hebelarm aus beweglichen Hebelabschnitten eine solche Sensorelektronik vorzusehen.

Zusätzlich oder alternativ kann bevorzugt sein, dass die Sensorelektronik dazu ausgelegt und eingerichtet ist, ein Winkelausgangssignal in Abhängigkeit von einer von dem Positionssensor, der als Drehwinkelsensor realisiert ist, beispielsweise als magnetoresistiver Positionssensor, etwa als xMR-Sensor, in Form einer Drehbewegung erfassten Transmissionsbewegung zu bestimmen. Das Winkelausgangssignal kann beispielsweise von der Sensorelektronik ausgegeben werden an eine Stellgeräteelektronik oder von der Sensorelektronik als Zwischenergebnis zur Bestimmung eines, insbesondere analogen und/oder linearisierten, Ausgabesignals verwendet werden. Vorzugsweise ist die Sensorelektronik gemäß dieser Ausführung dazu ausgelegt du eingerichtet, das Winkelausgangssignal unter Berücksichtigung eines radialen Versatzes und/oder Winkelversatzes zwischen einer Positionsgeber-Drehachse eines, insbesondere am Hebelarm drehfesten, Positionsgebers, wie eines Magneten, und einer Positionsnehmer-Drehachse, wie der Drehachse eines, insbesondere ortsfest in Bezug auf ein Sensorgehäuse, eine Stützstruktur und/oder ein Ventilgehäuse befestigten, vorzugweise magnetoresistiven Positionssensors. Infolge von Montagetoleranzen beim Anbringen des Positionssensors, beispielsweise eines xMR-Sensors, und/oder durch die Ausrichtung eines Positionsgebers, wie eines Drehmagneten, der die Transmissionsbewegung repräsentiert, in Bezug auf eine Drehachse des Hebelarms bzw. des Positionssensors können systematische Messfehler anfallen. Die Sensorelektronik kann gemäß dieser zweckmäßigen Ausgestaltung beispielsweise ab Werk vorkalibriert sein, um etwa Montagetoleranzen durch eine Kalibrierung mittels der Sensorelektronik Rechnung zu tragen. Auf diese Weise kann ein besonders präziser Winkelsensor realisiert werden.

Gemäß einer Weiterbildung einer Sensorvorrichtung mit Sensorelektronik ist letztere dazu ausgelegt und eingerichtet, zur Bestimmung des linearisierten Ausgabewerts die Hubamplitude, den Abstand und/oder wenigstens eine Hebellänge, insbesondere korrespondierend zum ersten Umkehrpunkt, zum zweiten Umkehrpunkt und/oder zur Neutralstellung, zu erfassen. Die Hebellänge kann beispielsweise mithilfe eines Indikators bestimmt werden. Vorzugsweise korrespondiert der erste Umkehrpunkt zu einer Schließstellung des Stellventils und der zweite Umkehrpunkt zu einer maximalen Öffnungsstellung des Stellventils. Alternativ oder zusätzlich können der erste Umkehrpunkt und/oder der zweite Umkehrpunkt zu einer maximalen ersten oder zweiten Auslenkung des Stellaktors korrespondieren. Die Hubamplitude kann vorzugsweise definiert sein durch den Abstand zwischen dem ersten Umkehrpunkt und dem zweiten Umkehrpunkt.

Die Erfindung betrifft auch eine Messanordnung für ein Stellventil einer prozesstechnischen Anlage, wie eine Chemieanlage, ein Kraftwerk, eine lebensmittelverarbeitende Anlage, oder dergleichen. Die Messanordnung umfasst eine linearbewegliche Stellstange zum Übertragen einer Hubbewegung von einem Stellaktor des Stellventils auf ein Stellglied des Stellventils. An der Stellstange ist eine Referenzstelle festgelegt. Die Referenzstelle ist mit der Stellstange um eine Hubamplitude verlagerbar zwischen einem ersten Umkehrpunkt, der zu einer Schließstellung des Stellglieds korrespondiert, und einem zweiten Umkehrpunkt, der zu einer maximalen Öffnungsstellung des Stellglieds korrespondiert. Die Messanordnung umfasst auch eine Stützstruktur, wie ein Joch, zum Befestigen des Stellaktors an einem das Stellglied aufnehmenden Ventilgehäuse des Stellventils. Ferner umfasst die Messanordnung eine ortsfest an der Stützstruktur angeordnete Sensorvorrichtung. Die Sensorvorrichtung kann insbesondere wie oben beschrieben ausgeführt sein. Die Sensorvorrichtung der Messanordnung umfasst einen, insbesondere magnetoresistiven, Positionssensor. Die Sensorvorrichtung umfasst einen Hebelarm, der um einen ortsfesten Drehpunkt der Sensorvorrichtung rotationsbeweglich ist. Vorzugsweise ist der Drehpunkt in Relation zu der Stützstruktur ortsfest. Der Hebelarm der Sensorvorrichtung ist ausgelegt zum Umwandeln der linearen Hubbewegung in eine korrespondierende, am Positionssensor abgebildete Transmissionsbewegung. Die abgebildete Transmissionsbewegung ist insbesondere rotatorisch, wobei vorzugsweise die Transmissionsbewegung im Bereich des Drehpunkts, besonders bevorzugt am Drehpunkt, für den Positionssensor abgebildet wird. Erfindungsgemäß ist vorgesehen, dass der Drehpunkt in Relation zu einem Mittelpunkt einer Hubamplitude in Richtung des ersten Umkehrpunkts versetzt angeordnet ist. Bei konventionellen Sensorvorrichtung mit Positionssensoren ist aus historischen Gründen im Allgemeinen eine spiegelsymmetrische Anordnung des Drehpunktes eines Hebelarms in Bezug auf eine Hubamplitude der Stellstange vorgesehen, wobei der Hebelarm im ersten Umkehrpunkt und im zweiten Umkehrpunkt die gleiche Auslenkung (in umgekehrter Richtung) erfährt und wobei die Messgenauigkeit oftmals in eine Mittelstellung zwischen den Umkehrpunkt am höchsten ist. Durch die erfindungsgemäße Verlagerung des Drehpunktes in Richtung des ersten Umkehrpunkt des, welcher der Schließstellung entspricht, wird der Bereich der höchsten Messgenauigkeit der Messanordnung zu Schließstellung hin verlagert. Eine hohen Messgenauigkeit in Bezug auf die Hubstellung des Stellglieds im Bereich der Schließstellung ist vorteilhaft, weil in diesem Bereich geringfügige Stellungsänderungen besonders hohe Auswirkungen auf die Druckdifferenz und/oder den Prozessfluiddurchfluss am Stellgerät haben. Ferner kann durch die besonders hohe Auflösung im Schließbereich eine höher auflösende und dadurch qualitativ bessere Diagnose in Bezug auf eventuellen Ventilsitzverschleiß durchgeführt werden.

Bei einer besonderen Ausführung einer Messanordnung ist der Drehpunkt um wenigstens 5 %, insbesondere wenigstens 10 %, und/oder nicht mehr als 30 %, insbesondere nicht mehr als 20 %, der Hubamplitude relativ zum Mittelpunkt versetzt angeordnet. Vorzugsweise ist der Drehpunkt um etwa 15 % der Hubamplitude relativ zum Mittelpunkt versetzt angeordnet. Es hat sich herausgestellt, dass bei einer derartigen Anordnung des Drehpunkts der Sensorvorrichtung auch bei einem großen Stellweg eine hohe Messgenauigkeit über einen Großteil der Hubamplitude oder sogar die gesamte Hubamplitude gestattet.

Gemäß einer Ausführung einer Messanordnung ist der Drehpunkt mit einem Abstand zur Stellstange, insbesondere zur Referenzstelle, orthogonal zur Hubrichtung um nicht mehr als 75 %, insbesondere nicht mehr als 66 %, vorzugsweise um etwa 50 %, der Hubamplitude angeordnet. Auf diese Weise kann der Bauraum der Messanordnung minimiert werden.

Bei einer Ausführung der Messanordnung, die mit den vorigen kombinierbar ist, weist der Hebelarm eine Neutralstellung auf, in der er senkrecht zu Hubrichtung orientiert ist. Ferner weist der Hebelarm eine zum ersten Umkehrpunkt korrespondierende erste Auslenkung auf und eine zum zweiten Umkehrpunkt korrespondierende zweite Auslenkung. Die Auslenkung bezeichnet vorzugsweise den Winkelversatz in Relation zu der senkrechten Neutralstellung. Die zweite Auslenkung ist größer als die erste Auslenkung. Vorzugsweise ist die größtmögliche Auslenkung des Hebelarms ausgehend von

seiner Neutralstellung in Richtung der Schließstellung kleiner als die größtmögliche Auslenkung des Hebelarms von seiner Neutralstellung in Richtung der maximal möglichen Öffnungsstellung. Es hat sich gezeigt, dass eine geringere Winkelversatz in Bezug eine Neutralstellung Hinblick die Messgenauigkeit zu bevorzugen ist, wobei oftmals in Bezug auf die Schließstellung und Öffnungsstellung in nahe der Schließstellung eine genaue besonders hohe Messepräsentation gefordert wird.

**[0028]** Bei einer bevorzugten Ausführung der Messanordnung hat der Hebelarm eine zur Hubamplitude korrespondierende Schwenkamplitude von wenigstens 75°, insbesondere wenigstens 85°. Bei einer Weiterbildung der Messanordnung, welche sich eines aus mehreren Hebelabschnitten zusammengesetzten Hebelarms wie oben beschrieben bedient, kann vorzugsweise vorgesehen sein, dass die Schwenkamplitude des Hebelarms die Schwenkamplitude des ersten und/oder proximalen Hebelabschnitts des Hebelarms bezeichnet. Die Schwenkamplitude beträgt vorzugsweise nicht mehr als 180°, insbesondere wenn als Positionssensor ein magnetoresistiver Sensor, wie ein AMR-Sensor, in der Messanordnung zum Einsatz kommt.

**[0029]** Alternativ betrifft die Erfindung ein Stellventil mit daran befestigter Sensorvorrichtung oder Messanordnung. Das Stellventil kann beispielsweise ein Hub-Stellventil sein, welches einen insbesondere linearbeweglichen Aktor zum Betätigen eines linearbeweglichen Stellglieds des Stellventils aufweist. Das Stellglied umfasst ein Stellventilgehäuse, in dem das Stellglied aufgenommen ist. Im Stellventilgehäuse ist ein durch das Stellglied zumindest teilweise, insbesondere vollständig, verschließbarer Ventilsitz angeordnet. Das linearbewegliche Stellglied des Stellventils kann beispielsweise ein Ventilkegel oder dergleichen sein, welcher translatorisch in einer Hubrichtung relativ zu dem zum Stellglied korrespondierenden Ventilsitz beweglich ist. Das Stellglied ist an einer Stellstange befestigt. An der Stellstange ist die Referenzstelle festgelegt. Das Stellventil umfasst optional einen Stellaktor zum Betätigen des Stellventils, welcher beispielsweise ein elektrischer, pneumatischer oder hydraulischer Stellaktor sein kann. Vorzugsweise umfasst das Stellventil eine am Ventilgehäuse befestigte Stützstruktur, wie ein Joch, an dem der Stellaktor befestigt oder befestigbar ist. Die Sensorvorrichtung ist am Stellventil, vorzugsweise an der Stützstruktur, befestigt. Der Hebelarm der Sensorvorrichtung ist mit der Referenzstelle der Stellstange positionstreu verbunden. Vorzugsweise ist die Sensorelektronik kalibriert, insbesondere im Werk vorkalibriert. Die Sensorvorrichtung umfasst eine Sensorelektronik. Die Sensorelektronik ist dazu ausgelegt und eingerichtet, einen vorzugsweise linearisierten Ausgabewert basierend auf der von dem Positionssensor erfassten, insbesondere rotatorischen, Transmissionsbewegung zu bestimmen.

**[0030]** Die Erfindung betrifft außerdem ein Verfahren zur Montage einer Sensorvorrichtung wie oben beschrieben. Bei der Montage der Sensorvorrichtung werden stellventilbezogene Daten erfasst. Vorzugsweise betreffen stellventilbezogene Daten im Allgemeinen Daten der Ventilmechanik, an welcher die Sensorvorrichtung zu montieren ist. Stellventilbezogene Daten können sich beispielsweise beziehen auf die Stellung der Stellstange in einem ersten Umkehrpunkt, der zu einer Schließstellung des Stellglieds korrespondiert, und/oder auf die Stellung der Stellstange in einem zweiten Umkehrpunkt, der zu einer maximalen Öffnungsstellung des Stellglieds korrespondiert. Alternativ oder zusätzlich können stellventilbezogene Daten sich beziehen auf eine Hubamplitude zwischen dem ersten Umkehrpunkt und dem zweiten Umkehrpunkt oder auf eine Position einer Referenzstelle an der Stellstange. Weiter alternativ oder zusätzlich können sich stellventilbezogene Daten auf Geometriedaten einer Stützstruktur, wie einem Joch, zum Befestigen des Stellaktors an einem das Stellglied aufnehmenden Ventilgehäuse des Stellventils beziehen.

**[0031]** Bei dem Verfahren zur Montage der Sensorvorrichtung ist ferner vorgesehen, dass auf die Sensorvorrichtung bezogenen Daten erfasst werden. Vorzugsweise berücksichtigen auf die Sensorvorrichtung bezogenen Daten einer an unterschiedlichen Stellventilen montierbaren Sensorvorrichtung, gegebenenfalls unter Berücksichtigung des konkreten Stellventils, an dem die Sensorvorrichtung gemäß dem erfindungsgemäßen Verfahren montiert wird bzw. dessen stellventilbezogene Daten. Auf die Sensorvorrichtung bezogenen Daten können beispielsweise den Abstand zwischen der Sensorvorrichtung, insbesondere dem Drehpunktes Sensorvorrichtung, und der Stellstange, betreffen. Insbesondere können auf die Sensorvorrichtung bezogenen Daten einen Abstand zwischen einem Drehpunkt der Sensorvorrichtung und einer an der Stellstange festgelegten Referenzstelle betreffen. Alternativ oder zusätzlich können die auf die Sensorvorrichtung bezogenen Daten wenigstens eine Hebellänge insbesondere korrespondierend zu einem ersten Umkehrpunkt, zum zweiten Umkehrpunkt und/oder zur Neutralstellung betreffen. Weiter alternativ oder zusätzlich können die auf die Sensorvorrichtung bezogenen Daten wenigstens eine Auslenkung des Hebelarms, insbesondere korrespondierend zum ersten und/oder zweiten Umkehrpunkt betreffen.

**[0032]** Ferner ist bei dem erfindungsgemäßen Verfahren zur Montage einer Sensorvorrichtung vorgesehen, dass eine Montagevorgabe basierend auf den stellventilbezogenen Daten und auf den auf die Sensorvorrichtung bezogenen Daten bestimmt wird. Ferner ist vorgesehen, dass die Montagevorgabe zum Befestigen der Sensorvorrichtung an dem Stellventil, insbesondere der Stützstruktur, auf einer Anzeigeeinheit ausgegeben wird. Gemäß einer ersten bevorzugten Ausführungsform kann die Anzeigeeinheit Teil der Sensorvorrichtung und/oder des Stellventils sein, beispielsweise ein Display eines Stellungsregler. Alternativ oder zusätzlich kann gemäß einer zweiten bevorzugten Ausführung die Anzeigeeinheit realisiert sein als ein Display einer von der Sensorvorrichtung und/oder dem Stellventil separaten Anzeige-

einheit, wie ein Laptop-Display oder ein Smartphone-Display.

Bei einer Ausführung des erfindungsgemäßen Verfahrens zur Montage der Sensorvorrichtung ist vorgesehen, dass die Sensorvorrichtung in einem Vormontagezustand an dem Stellventil, insbesondere der Stützstruktur, befestigt wird, bevor zumindest ein Teil der stellventilbezogenen Daten und/oder zumindest ein Teil der auf die Sensorvorrichtung bezogenen Daten erfasst werden, welche zur Bestimmung der Montagevorgabe berücksichtigt werden. Es kann besonders bevorzugt sein, dass im Rahmen des erfindungsgemäßen Verfahrens zur Montage einer Sensorvorrichtung an einem Stellventil zumindest ein Teil der auf die Sensorvorrichtung bezogenen Daten in dem Vormontagezustand erfasst werden.

Bei einer Weiterbildung des Verfahrens zur Montage der Sensorvorrichtung werden zumindest einige der auf die Sensorvorrichtung bezogenen Daten mittels der Sensorvorrichtung, insbesondere dem Positionssensor, erfasst.

Alternativ oder zusätzlich kann bei einer Ausführung des Verfahrens die Montagevorgabe optimiert werden basierend auf den stellventilbezogenen Daten und den auf die Sensorvorrichtung bezogenen Daten. Das Optimieren kann insbesondere hinsichtlich einer Minimierung der Hebellänge und/oder hinsichtlich einer Messauflösung des Hubwegs, vorzugsweise bei der Schließstellung, erfolgen. Auf diese Weise kann beispielsweise der Bauraum der Messanordnung minimiert werden und/oder die Messgenauigkeit in Bezug auf einen vorbestimmten Bereich, insbesondere im Bereich der Schließstellung, maximiert werden.

Bevorzugte Ausführungen der Erfindung werden in den abhängigen Ansprüchen beschrieben. Weitere Eigenschaften, Vorteile und Merkmale der Erfindung werden durch die folgende Beschreibung von bevorzugten Ausführungen der Erfindung anhand der beiliegenden Zeichnungen deutlich, in denen zeigen:

Figur 1    eine schematische Darstellung einer erfindungsgemäßen Sensorvorrichtung, wobei ein Hebelarm mit einer Referenzstelle verbunden ist, die sich an einem zweiten Umkehrpunkt befindet;

Figur 2    eine schematische Darstellung der Sensorvorrichtung gemäß Figur 1, wobei sich die Referenzstelle an einem Weg-Mittelpunkt befindet;

Figur 3    eine schematische Darstellung der Sensorvorrichtung gemäß Figur 1, wobei sich die Referenzstelle an einem ersten Umkehrpunkt befindet;

Figur 4    eine perspektivische Darstellung einer Sensorvorrichtung;

Figur 5    ein Diagramm des Linearitätsfehlers in Relation zu Hubstellung für eine erfindungsgemäße Sensorvorrichtung Vergleich zu einer konventionellen Sensorvorrichtung; und

Figur 6    ein Diagramm der Meßempfindlichkeit in Relation zu Hubstellung für eine erfindungsgemäße Sensorvorrichtung im Vergleich zu einer konventionellen Sensorvorrichtung.

In der nachfolgenden Beschreibung bevorzugter Ausführungen anhand der Figuren werden zur Vereinfachung der Lesbarkeit dieselben oder ähnliche Komponenten mit denselben oder ähnlichen Bezugszeichen versehen.

Eine erfindungsgemäße Sensorvorrichtung wird nachfolgend im Allgemeinen mit dem Bezugszeichen 1 bezeichnet. Die Sensorvorrichtung 1 umfasst als Bestandteile einen Positionssensor 3 und einen Hebelarm 4.

Eine erfindungsgemäße Messanordnung wird nachfolgend im Allgemeinen mit dem Bezugszeichen 10 bezeichnet. Die Messanordnung 10 umfasst als Bestandteile eine linearbewegliche Stellstange 5, eine Stützstruktur 13 und eine Sensorvorrichtung 1 mit einem rotationsbeweglichen Hebelarm 4 mit einem Drehpunkt 3. Der Stellaktor und das Stellventil, insbesondere dessen Ventilgehäuse und Stellglied, der Messanordnung 1 sind nicht näher dargestellt.

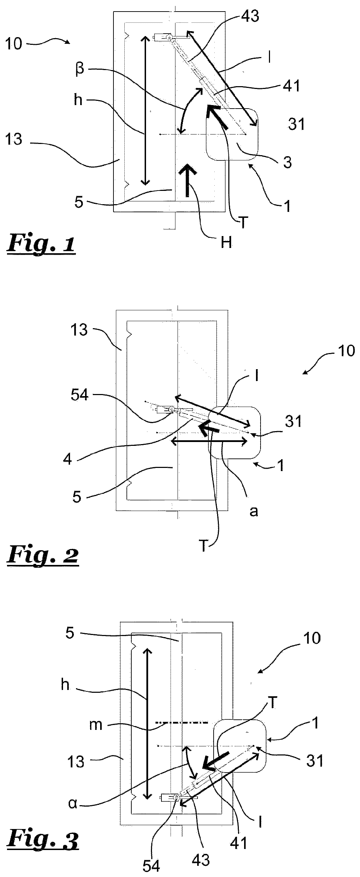

Die Figuren 1 bis 3 zeigen eine Sensorvorrichtung 1, die ortsfest an einer Stützstruktur 13, wie einem Joch, befestigt ist und eine in der Stützstruktur 13 geführte Stellstange 5. An der Stellstange 5 ist eine Referenzstelle 54 festgelegt, die ortsfest in Bezug die Stellstange 5 ist. Die Referenzstelle 54 bewegt sich mit der Stellstange 5. Die Referenzstelle 54 vollführt dieselbe lineare Bewegung wie die Stellstange 5.

Die Sensorvorrichtung 1 hat einen Hebelarm 4 der an einem Drehpunkt 31 in Bezug auf die Stützstruktur 13 bzw. ein Gehäuse der Sensorvorrichtung 1 drehbar und ortsfest gelagert ist. Der Hebelarm 4 ist an der Referenzstelle 54 an die Stellstange 5 angelenkt. Vorzugsweise ist der Hebelarm 4 an der Referenzstelle 54 drehbar und bezüglich der Stellstange 5 ortsfest gelagert. Quer, insbesondere orthogonal, zur Stellstange 5 ist der Drehpunkt 31 des Hebelarms 4 in einem Abstand a zu der Stellstange 5 angeordnet.

Der kürzeste Längsabstand 1 zwischen dem Drehpunkt 31 und der Referenzstelle 54 hängt von der gegenwärtigen Stellung der Stellstange 5 ab. In einer nicht näher dargestellten Neutralstellung, in welcher der Längsabstand orthogonal zur linearen Bewegungsrichtung H der Stellstange 5 orientiert ist und sich durch den Drehpunkt 31 erstreckt, ist der Längsabstand l minimal. Die Bewegungsrichtung der Stellstange kann als Hubrichtung H bezeichnet sein. Ausgehend von der Neutralstellung vergrößert sich der Längsabstand I bei einer Bewegung Referenzstelle 54 in Richtung eines ersten Umkehrpunkt des ersten Umkehrpunkts (Figur 3) wie auch in Richtung des zweiten Umkehrpunkts (Figur 1). Der Längsabstand I ist im zweiten Umkehrpunkt größer als im ersten Umkehrpunkt.

Der erste Hebelabschnitt 41 und der zweite Hebelabschnitt 43, die gemeinsam den Hebelarm 4 bilden, sind relativ zueinander translationsbeweglich. Bei der in den Figuren dargestellten bevorzugten Ausführungsform ist der erste Hebelabschnitt 41 als eine Teleskophülse und der zweite Hebelabschnitt 43 als einen darin geführte Teleskopstange realisiert. Zwischen der Teleskopstange und Teleskophülse ist vorzugsweise eine Gleitpassung vorgesehen, insbesondere mit wenig Reibung und/oder wenig Spiel.

An der Referenzstelle 54 ist eine Kopplung 45 vorgesehen, die den Hebelarm 4, insbesondere dessen zweiten Hebelabschnitt 43, mit der Stellstange 5 verbindet.

Bei der erfindungsgemäßen Messanordnung 10 ist die Neutralstellung gemäß Figur 2 in Relation zu einem Mittelpunkt m der Hubamplitude h in Richtung des ersten, zur Schließstellung korrespondierenden Umkehrpunkts um etwa 15 % der Hubamplitude h verlagert. In Relation zu der Neutralstellung ist die erste Auslenkung $\alpha$ des Hebelarms 4 bzw. des am Drehpunkt 31 drehbar gelagerten des ersten Hebelabschnitts 41 am ersten Umkehrpunkt kleiner als dessen zweite Auslenkung $\beta$ am zweiten Umkehrpunkt.

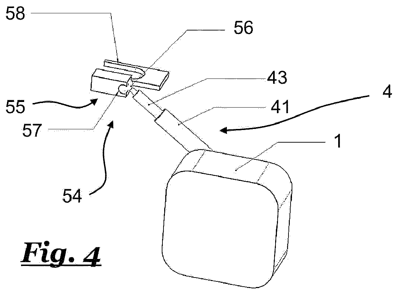

Figur 4 zeigt eine perspektivische Darstellung einer speziellen Ausführung erfindungsgemäßen Sensorvorrichtung 1. Die Kopplung 54 zum Verbinden des Hebelarms 4 mit der (nicht näher dargestellten) Stellstange umfasst ein Kugelgelenk 55. Das Kugelgelenk 55 umfasst einen starr mit dem Hebelarm 4 verbundenen Kugelkopf 56 und eine zum Kugelkopf 56 formkomplementäre Führungsnut 57 oder - Pfanne. Die Führungsnut 57 ist starr verbunden mit einer Befestigungsklammer 58, die an der Stellstange befestigt oder befestigbar ist.

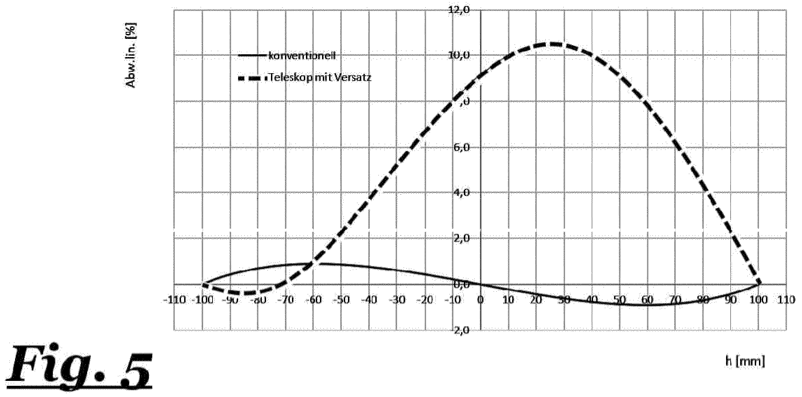

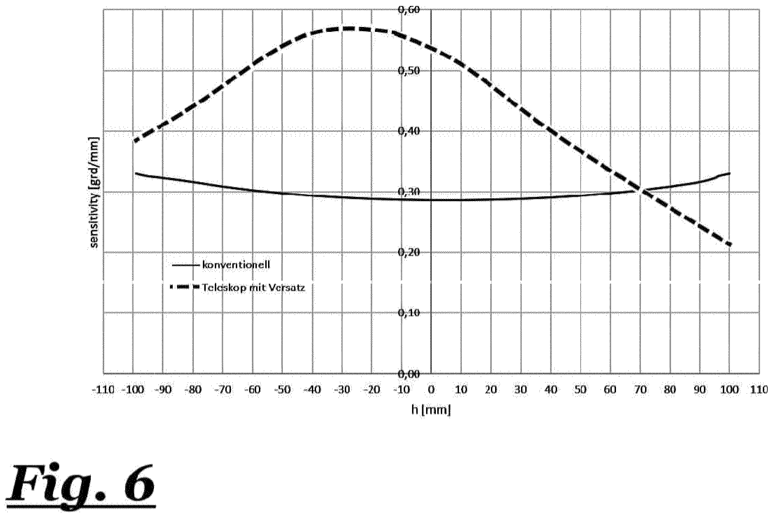

Die in den Figuren 5 und 6 dargestellten Diagramme betreffen Messanordnungen für denselben Hubweg von beispielsweise 200 mm. Bei der konventionellen Sensorvorrichtung sind gleich große maximale Auslenkungen von $\pm30°$ bei einem Abstand des auf Höhe des Hubweg-Mittelpunkt m angeordneten Drehpunkts eines Hebels gegenüber der Stellstange von 190 mm vorgesehen. Hinsichtlich der erfindungsgemäßen Sensorvorrichtung 1 sei angenommen, dass, wie in den Figuren dargestellt, ein Teleskop hierbarer Hebelarm 4 aus zwei Hebelabschnitten 41, **43** vorgesehen ist. Der Hubweg h beträgt wiederum 200 mm, wobei der Querabstand a ist Drehpunkts 31 zur Stellstange 5 auf 100 mm reduziert ist. Gegenüber dem Mittelpunkt m des Hubwegs h sei der Drehpunkt 31 um 30 mm versetzt in Richtung der Schließstellung (Figur 3). Am ersten Umkehrpunkt hat der Hebelarm 4 eine erste Auslenkung $\alpha$ von etwa 52,4°. Am zweiten Umkehrpunkt hat der Hebelarm 4 eine zweite Auslenkung $\beta$ von etwa 35,0 °.

Abhängig von der Hubstellung $s_i$ kann die gegenwärtige Auslenkung $\omega_i$ berechnet werden mit der Formel (1)

$$\omega_i = \arctan\left(\left(s_i - \Delta m\right) / h\right)$$

wobei h den Hubweg der Stellstange bezeichnet, $\Delta m$ den Abstand des Drehpunkts 31 in Relation zum Mittelpunkt m des Hubwegs h parallel zur Bewegungsrichtung H der Stellstange 5, und $s_i$ die Hubstellung in Relation zu einer Neutralstellung auf der Ebene des Mittelpunkts m.

Ein linearisierter Verlauf lässt sich bestimmen auf Basis einer Gerade durch die Endpunkte einer Kurve, welche die Auslenkung $\omega$ gegen die Hubstellung s aufträgt, an den Umkehrpunkten. Die Differenz zwischen dem linearisierten Verlauf und der Formel (1) kann es Linearitätsfehler bezeichnet werden. Wie in Figur 6 zu erkennen, ist der absolute Linearitätsfehler der erfindungsgemäßen Sensorvorrichtung 1 unter den oben genannten Annahmen im Bereich einer gegenwärtigen Hubstellung $s_i$ zwischen dem ersten Umkehrpunkt entsprechend der Schließstellung und einem Schnittpunkt bei einer Hubstellung von hier beispielsweise etwa - 60 mm kleiner oder gleich dem Linearitätsfehler einer vergleichbaren konventionellen Sensorvorrichtung. In dem übrigen Bereich des Hubwegs h ist der Linearitätsfehler größer. Die Erfinder haben überraschenderweise herausgefunden, dass der Linearitätsfehler systematisch ist und zur Bestimmung eines Ausgabewertes durch eine Sensorelektronik rechnerisch neutralisiert werden, beispielsweise mithilfe einer entsprechenden hinterlegten Tabelle oder Rechenroutine. Entgegen des weitverbreiteten Vorurteils kann der große Linearitätsfehler des erfindungsgemäßen Sensorvorrichtung in Kauf genommen werden, ohne qualitative Einbuße der Messpräzision hinnehmen zu müssen. Im Bereich der Schließstellung kann eine erfindungsgemäße Sensorvorrichtung folglich gegebenenfalls ohne Linearisierung eines Ausgabewertes der Sensorvorrichtung betrieben werden.

Die Empfindlichkeit E [grd/mm] der Sensorrichtung lässt sich bestimmen anhand der Formel (2)

$$E = (s_1 * \omega_1) / (s_2 * \omega_2)$$

wobei $s_i$ die gegenwärtige Hubstellung und wobei $\omega_i$ die gegenwärtige Auslenkung für zwei benachbarte Hubstellungen i bezeichnet.

Mit einer erfindungsgemäßen Sensorvorrichtung 1 kann im Bereich des ersten Umkehrpunkt des, vorzugsweise der Schließstellung, gegebenenfalls bis hin zu einer Neutralstellung oder sogar darüber hinaus, eine im Vergleich zu konventionellen Sensorvorrichtung deutlich erhöhte Empfindlichkeit erreicht werden. Es hat sich herausgestellt, des eine im Vergleich zu konventionellen Sensorverrichtungen verringerte Empfindlichkeit im Bereich eines zweiten Umkehrpunkt des, vorzugsweise der maximalen Öffnungsstellung, ohne weiteres hinnehmbar ist, der geringfügige Änderungen der Ventilstellung in Bereich des zweiten Umkehrpunkts praktisch keine relevanten Auswirkungen für einen Stellungsregler haben.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

Bezugzeichen:

| | |
|---|---|
| 1 | Sensorvorrichtung |
| 3 | Positionssensor |
| 4 | Hebelarm |
| 5 | Stellstange |
| 10 | Messanordnung |
| 13 | Stützstruktur |
| 31 | Drehpunkt |
| 41 | erster Hebelabschnitt |
| 43 | zweiter Hebelabschnitt |
| 45 | Kopplung |
| 54 | Referenzstelle |
| 55 | Kugelgelenk |
| 56 | Kugelkopf |
| 57 | Führungsnut |
| 58 | Befestigungsklammer |

| | |
|---|---|
| a | Abstand |
| h | Hubamplitude |
| l | Hebellänge |
| m | Mittelpunkt |
| H | Hubrichtung |
| T | Translationsrichtung |

| | |
|---|---|
| $\alpha$ | erste Auslenkung |
| $\beta$ | zweite Auslenkung |
| $\gamma$ | Schwenkamplitude |

**Patentansprüche**

1. Sensorvorrichtung (1) für ein Stellventil (11) einer prozesstechnischen Anlage, wie eine Chemieanlage, ein Kraftwerk, eine lebensmittelverarbeitende Anlage, oder dergleichen, umfassend:

    einen, insbesondere magnetoresistiven, Positionssensor (3),
    einen um einen ortsfesten Drehpunkt (31) der Sensorvorrichtung (1) rotationsbeweglichen Hebelarm (4) zum Umwandeln einer linearen Hubbewegung einer Stellstange (5) des Stellventils (11) in eine korrespondierende, am Positionssensor (3) abgebildete, insbesondere rotatorische, Transmissionsbewegung,
    wobei der Hebelarm (4) eine Kopplung (45) zum positionstreuen, rotationsbeweglichen Verbinden des Hebelarms (4) mit einer Referenzstelle (54) der Stellstange (5) aufweist, und
    der Hebelarm (4) zumindest einen ersten Hebelabschnitt (41) und zumindest einen relativ zum ersten Hebelabschnitt (41) beweglichen zweiten Hebelabschnitt (43) umfasst, und **dadurch gekennzeichnet,**
    **dass** der erste Hebelabschnitt (41) relativ zu dem zweiten Hebelabschnitt (43) in einer durch den Drehpunkt (31) und die Referenzstelle (54) festgelegten Translationsrichtung (T) translationsbeweglich ist.

2. Sensorvorrichtung nach Anspruch 1, **dadurch gekennzeichnet, dass** die Beweglichkeit der Hebelabschnitte (41, 43) relativ zueinander kinematisch eindeutig definiert ist, sodass jeder Stellung des ersten Hebelabschnitts (41) eindeutig eine korrespondierende Stellung des zweiten Hebelabschnitts (43) zuordenbar ist, und/oder dass der erste, proximale Hebelabschnitt (41) näher an dem Drehpunkt (31) angeordnet ist als der zweite, distale Hebelabschnitt (43).

3. Sensorvorrichtung (1) nach Anspruch 1 oder 2, **dadurch gekennzeichnet, dass** der Hebelarm (4) eine Teleskophülse, insbesondere als ersten Hebelabschnitt (41), und eine in der Teleskophülse translatorisch geführte Teleskopstange, insbesondere als zweiten Hebelabschnitt (43), aufweist.

4. Sensorvorrichtung (1) nach einem der vorstehenden Ansprüche, **dadurch gekennzeichnet, dass** der erste Hebelabschnitt (41) starr mit einem Drehgelenk (33) zur Drehung um den Drehpunkt (31) verbunden ist und/oder dass der zweite Hebelabschnitt (43) starr mit der Kopplung (45) verbunden ist.

5. Sensorvorrichtung (1) nach einem der vorstehenden Ansprüche, **dadurch gekennzeichnet, dass** der Hebelarm (4) zumindest einen die Relativstellung des ersten Hebelabschnitts (41) in Bezug auf den zweiten Hebelabschnitt (43) repräsentierenden Indikator aufweist.

6. Sensorvorrichtung (1) nach einem der vorstehenden Ansprüche, **dadurch gekennzeichnet, dass** der Hebelarm (4) von einer Hülle, wie einem Balg, beispielsweise ein Ziehharmonikabalg aus Gummi oder einem Elastomer, umgeben ist, die sich zumindest abschnittsweise in der Translationsrichtung (T) entlang dem Hebelarm (4) erstreckt und/oder korrespondierend zur Relativstellung des ersten Hebelabschnitts (41) in Bezug auf den zweiten Hebelabschnitt (43) verformbar ist.

7. Sensorvorrichtung (1) nach einem der vorstehenden Ansprüche, **dadurch gekennzeichnet, dass** der Hebelarm (4) drei oder mehr relativ zu einander bewegliche, insbesondere translationsbewegliche, vorzugsweise in der Translationsrichtung (T) translationsbewegliche, Hebelabschnitte (41, 43) umfasst.

8. Sensorvorrichtung (1) nach einem der vorstehenden Ansprüche, **dadurch gekennzeichnet, dass** die Kopplung (45) ein Kugelgelenk oder ein Drehgelenk umfasst.

9. Sensorvorrichtung (1) nach einem der vorstehenden Ansprüche, **gekennzeichnet durch** eine mit dem, insbesondere magnetoresistiven, Positionssensor (3) verbundene Sensorelektronik, die dazu ausgelegt und eingerichtet ist, einen vorzugsweise linearisierten Ausgabewert basierend auf der von dem Positionssensor erfassten, insbesondere rotatorischen, Transmissionsbewegung zu bestimmen, und/oder dazu, ein Winkelausgangssignal in Abhängigkeit von einer von dem als Drehwinkelsensor realisieren Positionssensor in Form einer Drehbewegung erfassten Transmissionsbewegung zu bestimmen, wobei vorzugsweise die Sensorelektronik dazu ausgelegt und eingerichtet ist, einen Winkelversatz und/oder radialen Versatz zwischen einer Positionsgeber-Drehachse und einer Positionsnehmer-Drehachse des Positionssensors zu berücksichtigen, wobei insbesondere die Sensorelektronik dazu ausgelegt und eingerichtet ist, eine Winkel-Bestimmung in Bezug auf eine rotatorische Transmissionsbewegung durchzuführen und anschließend eine systematische Linearitätsanpassung, oder eine Winkel-Bestimmung unter Verwendung einer linearitätsangepassten Winkeltabelle durchzuführen.

10. Sensorvorrichtung (1) nach Anspruch 9, **dadurch gekennzeichnet dass** die Sensorelektronik dazu ausgelegt und eingerichtet ist, zur Bestimmung des linearisierten Ausgabewerts die Hubamplitude (h), den Abstand (a) und/oder wenigstens eine Hebellänge (I), insbesondere korrespondierend zum ersten Umkehrpunkt, zum zweiten Umkehrpunkt und/oder zur Neutralstellung, zu erfassen.

11. Messanordnung (10) für ein Stellventil einer prozesstechnischen Anlage, wie eine Chemieanlage, ein Kraftwerk, eine lebensmittelverarbeitende Anlage, oder dergleichen, umfassend:

eine linearbewegliche Stellstange (5) zum Übertragen einer Hubbewegung von einem Stellaktor des Stellventils auf ein Stellglied des Stellventils, wobei an der Stellstange (5) eine Referenzstelle (54) festgelegt ist, die mit der Stellstange (5) um eine Hubamplitude (h) zwischen einem ersten Umkehrpunkt, der zu einer Schließstellung des Stellglieds korrespondiert, und einem zweiten Umkehrpunkt, der zu einer maximalen Öffnungsstellung des Stellglieds korrespondiert, verlagerbar ist,
eine Stützstruktur (13), wie ein Joch, zum Befestigen des Stellaktors an einem das Stellglied aufnehmenden Ventilgehäuse des Stellventils (5),
eine ortsfest an der Stützstruktur (5) angeordnete Sensorvorrichtung (1) nach einem der vorstehenden Ansprüche mit einem, insbesondere magnetoresistiven, Positionssensor (3) und einen um einen ortsfesten Drehpunkt (31) der Sensorvorrichtung (1) rotationsbeweglichen Hebelarm (4) zum Umwandeln der linearen Hubbewegung in eine korrespondierende, am Positionssensor (3) abgebildete, insbesondere rotatorische, Transmissionsbewegung, **dadurch gekennzeichnet, dass**
der Drehpunkt (31) in Relation zu einem Mittelpunkt (m) einer Hubamplitude (h) in Richtung des ersten Umkehrpunkts versetzt angeordnet ist.

12. Messanordnung (10) nach Anspruch 11, **dadurch gekennzeichnet, dass** der Drehpunkt (31) um wenigstens 5%, insbesondere wenigstens 10%, und/oder nicht mehr als 30%, insbesondere nicht mehr als 20%, vorzugsweise um etwa 15% der Hubamplitude (h) relativ zum Mittelpunkt (m) versetzt angeordnet ist.

13. Messanordnung (10) nach Anspruch 11 oder 12, **dadurch gekennzeichnet, dass** der Drehpunkt (31) mit einem Abstand (a) zur Stellstange (5), insbesondere zur Referenzstelle (54), orthogonal zur Hubrichtung um nicht mehr als 75%, insbesondere nicht mehr als 66%, vorzugsweise um etwa 50%, der Hubamplitude (h) angeordnet ist.

14. Messanordnung (10) nach einem der Ansprüche 11 bis 13, **dadurch gekennzeichnet, dass** der Hebelarm (4) in Relation zu einer Neutralstellung, in der der Hebelarm (4) senkrecht zur Hubrichtung (H) orientiert ist, eine zum ersten Umkehrpunkt korrespondierende erste Auslenkung ($\alpha$) und eine zum zweiten Umkehrpunkt korrespondierende zweite Auslenkung ($\beta$) aufweist, wobei die zweite Auslenkung ($\beta$) größer ist als die erste Auslenkung ($\alpha$).

15. Messanordnung (10) nach einem der Ansprüche 11 bis 14, **dadurch gekennzeichnet, dass** der Hebelarm (4) eine zur Hubamplitude (h) korrespondierende Schwenkamplitude ($\gamma$) von wenigstens 75°, insbesondere wenigstens 85°, aufweist.

16. Verfahren zur Montage einer Sensorvorrichtung (1) nach einem der Ansprüche 1 bis 10 an einem Stellventil, **dadurch gekennzeichnet, dass**

stellventilbezogene Daten, wie eine Hubamplitude (h) der Stellstange (5) zwischen einem ersten Umkehrpunkt, der zu einer Schließstellung des Stellglieds korrespondiert, und einem zweiten Umkehrpunkt, der zu einer maximalen Öffnungsstellung des Stellglieds korrespondiert, eine Position der Referenzstelle (54) an der Stellstange (5), Geometriedaten einer Stützstruktur (13), wie einem Joch, zum Befestigen des Stellaktors an einem das Stellglied aufnehmenden Ventilgehäuse des Stellventils , erfasst werden,

und wobei auf die Sensorvorrichtung (1) bezogene Daten, wie ein Abstand (a) zwischen Sensorvorrichtung (1) und Stellstange (5), insbesondere zwischen Drehpunkt (31) und Referenzstelle (54), wenigstens eine Hebellänge (I), insbesondere korrespondierend zum ersten Umkehrpunkt, zum zweiten Umkehrpunkt und/oder zur Neutralstellung, wenigstens eine Auslenkung (α, β) des Hebelarms (4), insbesondere korrespondierend zum ersten Umkehrpunkt und/oder zum zweiten Umkehrpunkt, erfasst werden,

und eine Montagevorgabe basierend auf den stellventilbezogenen Daten und auf den auf die Sensorvorrichtung bezogenen Daten bestimmt wird,

und auf einer Anzeigeeinheit die Montagevorgabe zum Befestigen der Sensorvorrichtung (1) an dem Stellventil, insbesondere der Stützstruktur (13), ausgegeben wird.

## Claims

1. Sensor device (1) for a control valve (11) of a process engineering plant, such as a chemical plant, a power plant, a food processing plant or the like, comprising:

   an, in particular magnetoresistive, position sensor (3),
   a lever arm (4), which is rotationally movable about a fixed rotation point (31) of the sensor device (1), for converting a linear stroke movement of an actuating rod (5) of the control valve (11) into a corresponding, in particular rotational, transmission movement imaged on the position sensor (3),
   wherein the lever arm (4) has a coupling (45) for positionally accurate, rotationally movable connection of the lever arm (4) to a reference point (54) of the actuating rod (5), and
   the lever arm (4) comprises at least one first lever section (41) and at least one second lever section (43) movable relative to the first lever section (41), and **characterized in that**
   the first lever section (41) is translationally movable relative to the second lever section (43) in a translational direction (T) defined by the rotation point (31) and the reference point (54).

2. Sensor device according to Claim 1, **characterized in that** the movability of the lever sections (41, 43) relative to one another is defined in a kinematically unambiguous manner, such that each position of the first lever section (41) can be unambiguously assigned a corresponding position of the second lever section (43), and/or **in that** the first, proximal lever section (41) is arranged closer to the rotation point (31) than the second, distal lever section (43).

3. Sensor device (1) according to Claim 1 or 2, **characterized in that** the lever arm (4) has a telescopic sleeve, in particular as first lever section (41), and a telescopic rod guided translationally in the telescopic sleeve, in particular as second lever section (43).

4. Sensor device (1) according to one of the preceding claims, **characterized in that** the first lever section (41) is rigidly connected to a rotary joint (33) for rotation about the rotation point (31), and/or **in that** the second lever section (43) is rigidly connected to the coupling (45).

5. Sensor device (1) according to one of the preceding claims, **characterized in that** the lever arm (4) has at least one indicator representing the relative position of the first lever section (41) with respect to the second lever section (43).

6. Sensor device (1) according to one of the preceding claims, **characterized in that** the lever arm (4) is surrounded by a casing, such as a bellows, for example an accordion bellows made of rubber or an elastomer, which extends at least in sections in the translational direction (T) along the lever arm (4) and/or is deformable corresponding to the relative position of the first lever section (41) with respect to the second lever section (43).

7. Sensor device (1) according to one of the preceding claims, **characterized in that** the lever arm (4) comprises three or more lever sections (41, 43) movable relative to one another, in particular translationally movable, preferably translationally movable in the translational direction (T).

8. Sensor device (1) according to one of the preceding claims, **characterized in that** the coupling (45) comprises a ball joint or a rotary joint.

9. Sensor device (1) according to one of the preceding claims, **characterized by** sensor electronics connected to the, in particular magnetoresistive, position sensor (3), which are designed and configured to determine a preferably linearized output value on the basis of the, in particular rotational, transmission movement detected by the position sensor, and/or to determine an angle output signal as a function of a transmission movement detected by the position sensor realized as a rotation angle sensor in the form of a rotational movement, wherein preferably the sensor electronics are designed and configured to take into account an angle offset and/or radial offset between a position encoder rotation axis and a position receiver rotation axis of the position sensor,

wherein in particular the sensor electronics are designed and configured to carry out an angle determination with respect to a rotational transmission movement and subsequently carry out a systematic linearity adaptation, or an angle determination using a linearity-adapted angle table.

10. Sensor device (1) according to Claim 9, **characterized in that** the sensor electronics are designed and configured in order to determine the linearized output value, to detect the stroke amplitude (h), the distance (a) and/or at least one lever length (l), in particular corresponding to the first reversal point, to the second reversal point and/or to the neutral position.

11. Measuring arrangement (10) for a control valve of a process engineering plant, such as a chemical plant, a power plant, a food processing plant or the like, comprising:

a linearly movable actuating rod (5) for transmitting a stroke movement from an control actuator of the control valve to an actuating element of the control valve, wherein a reference point (54) is defined on the actuating rod (5), which reference point is displaceable with the actuating rod (5) by a stroke amplitude (h) between a first reversal point, which corresponds to a closed position of the actuating element, and a second reversal point, which corresponds to a maximum open position of the actuating element,
a supporting structure (13), such as a yoke, for fastening the control actuator to a valve housing, which receives the actuating element, of the control valve (5),
a sensor device (1) according to one of the preceding claims arranged in a fixed manner on the supporting structure (5) and having an, in particular magnetoresistive, position sensor (3) and a lever arm (4), which is rotationally movable about a fixed rotation point (31) of the sensor device (1), for converting the linear stroke movement into a corresponding, in particular rotational, transmission movement imaged on the position sensor (3), **characterized in that**
the rotation point (31) is arranged offset in relation to a center point (m) of a stroke amplitude (h) in the direction of the first reversal point.

12. Measuring arrangement (10) according to Claim 11, **characterized in that** the rotation point (31) is arranged offset by at least 5%, in particular at least 10%, and/or not more than 30%, in particular not more than 20%, preferably by approximately 15%, of the stroke amplitude (h) relative to the center point (m).

13. Measuring arrangement (10) according to Claim 11 or 12, **characterized in that** the rotation point (31) is arranged at a distance (a) from the actuating rod (5), in particular from the reference point (54), orthogonally to the stroke direction by not more than 75%, in particular not more than 66%, preferably by approximately 50%, of the stroke amplitude (h).

14. Measuring arrangement (10) according to one of Claims 11 to 13, **characterized in that** the lever arm (4) has, in relation to a neutral position, in which the lever arm (4) is oriented perpendicularly to the stroke direction (H), a first deflection ($\alpha$) corresponding to the first reversal point and a second deflection ($\beta$) corresponding to the second reversal point, wherein the second deflection ($\beta$) is greater than the first deflection ($\alpha$).

15. Measuring arrangement (10) according to one of Claims 11 to 14, **characterized in that** the lever arm (4) has a pivoting amplitude ($\gamma$) corresponding to the stroke amplitude (h) of at least 75°, in particular at least 85°.

16. Method for mounting a sensor device (1) according to one of Claims 1 to 10 on a control valve, **characterized in that**

control-valve-related data, such as a stroke amplitude (h) of the actuating rod (5) between a first reversal point, which corresponds to a closed position of the actuating element, and a second reversal point, which corresponds to a maximum open position of the actuating element, a position of the reference point (54) on the actuating rod (5), geometry data of a supporting structure (13), such as a yoke, for fastening the control actuator to a valve housing, which receives the actuating element, of the control valve are acquired,
and wherein data related to the sensor device (1), such as a distance (a) between sensor device (1) and actuating rod (5), in particular between rotation point (31) and reference point (54), at least one lever length (l), in particular corresponding to the first reversal point, to the second reversal point and/or to the neutral position, at least one deflection ($\alpha$, $\beta$) of the lever arm (4), in particular corresponding to the first reversal point and/or to the second reversal point, are acquired,

and a mounting specification is determined on the basis of the control-valve-related data and on the basis of the data related to the sensor device,

and the mounting specification for fastening the sensor device (1) to the control valve, in particular to the supporting structure (13), is output on a display unit.

## Revendications

1. Dispositif de capteurs (1), destiné à une vanne de régulation (11) d'une installation de procédé technique, telle qu'une installation chimique, une installation de traitement de produits alimentaires ou analogues, comprenant :

   un capteur de position (3), notamment magnétorésistif,

   un bras de levier (4), déplaçable en rotation autour d'un point de rotation (31) stationnaire du dispositif de capteurs (1), destiné à transformer un déplacement en course linéaire d'une barre de réglage (5) de la vanne de régulation (11) en un déplacement de transmission correspondant, notamment rotatoire, reproduit sur le capteur de position (3), le bras de levier (4) comportant un couplage (45) pour l'assemblage en position immuable, déplaçable en rotation du bras de levier (4) avec un point de référence (54) de la barre de réglage (5) et

   le bras de levier (4) comprenant au moins un premier segment de levier (41) et au moins un deuxième segment de levier (43), déplaçable par rapport au premier segment de levier (41) et **caractérisé en ce que**

   le premier segment de levier (41) est déplaçable en translation par rapport au deuxième segment de levier (43), dans une direction de translation (T) fixée par le point de rotation (31) et par le point de référence (54).

2. Dispositif de capteurs selon la revendication 1, **caractérisé en ce que** l'aptitude au déplacement des segments de levier (41, 43) l'un par rapport à l'autre est définie sans équivoque du point de vue cinématique, de telle sorte qu'à chaque position du premier segment de levier (41) puisse être associée sans équivoque une position correspondante du deuxième segment de levier (43) et / ou **en ce que** le premier segment de levier (41) proximal est placé plus près du point de rotation (31) que le deuxième segment de levier (43) distal.

3. Dispositif de capteurs (1) selon la revendication 1 ou 2, **caractérisé en ce que** le bras de levier (4) comporte une douille télescopique, notamment en tant que premier segment de levier (41) et une barre télescopique, guidée en translation dans la douille télescopique, notamment en tant que deuxième segment de levier (43).

4. Dispositif de capteurs (1) selon l'une quelconque des revendications précédentes, **caractérisé en ce que** le premier segment de levier (41) est assemblé de manière rigide avec une articulation rotative (33) pour la rotation autour du point de rotation (31) et / ou **en ce que** le deuxième segment de levier (43) est assemblé de manière rigide avec le couplage (45).

5. Dispositif de capteurs (1) selon l'une quelconque des revendications précédentes, **caractérisé en ce que** le bras de levier (4) comporte au moins un indicateur représentant la position relative du premier segment de levier (41) en rapport au deuxième segment de levier (43).

6. Dispositif de capteurs (1) selon l'une quelconque des revendications précédentes, **caractérisé en ce que** le bras de levier (4) est entouré d'une gaine, telle qu'un soufflet, par exemple un soufflet en accordéon en caoutchouc ou en un élastomère, qui s'étend au moins par segments dans la direction de translation (T) le long du bras de levier (4) et / ou est déformable en correspondance avec la position relative du premier segment de levier (41) en rapport au deuxième segment de levier (43).

7. Dispositif de capteurs (1) selon l'une quelconque des revendications précédentes, **caractérisé en ce que** le bras de levier (4) comprend trois segments de levier (41, 43) ou plus, déplaçables les uns par rapport aux autres, notamment déplaçables en translation, de préférence déplaçables en translation dans la direction de translation (T).

8. Dispositif de capteurs (1) selon l'une quelconque des revendications précédentes, **caractérisé en ce que** le couplage (45) comprend une articulation sphérique ou une articulation rotative.

9. Dispositif de capteurs (1) selon l'une quelconque des revendications précédentes, **caractérisé par** une électronique de capteur, connectée avec le capteur de position (3), notamment magnéto-résistif, qui est conçue et configurée pour déterminer une valeur d'édition de préférence linéarisée, sur la base du déplacement en transmission notamment rotatoire détecté par le capteur de position et / ou pour déterminer un signal de sortie angulaire en fonction d'un déplacement en transmission détecté sous la forme d'un déplacement rotatoire par le capteur de position, réalisé sous la forme d'un capteur d'angle de rotation, de préférence l'électronique de capteur étant conçue et configurée pour prendre en considération un décalage angulaire et / ou un décalage radial entre un axe de rotation d'un transmetteur de position et un axe de rotation d'un récepteur de position du capteur de position, notamment l'électronique de capteur étant conçue et configurée pour procéder à la détermination d'un angle en rapport à un déplacement en transmission rotatoire et pour procéder ensuite à une adaptation systématique de linéarité ou à une détermination d'angle, en utilisant un tableau des angles adapté en linéarité.

10. Dispositif de capteurs (1) selon la revendication 9, **caractérisé en ce que** l'électronique de capteur est conçue et configurée pour, afin de déterminer la valeur d'édition linéarisée, détecter l'amplitude de course (h), l'écart (a) et / ou au moins une longueur de levier (1), notamment en correspondance avec le premier point d'inversion, le deuxième point d'inversion et / ou la position neutre.

11. Ensemble de mesure (10), destiné à une vanne de régulation d'une installation de procédé technique, telle qu'une installation chimique, une installation de traitement de produits alimentaires ou analogues, comprenant :

une barre de réglage (5) linéairement déplaçable, destinée à transmettre un déplacement en course d'un actionneur de réglage de la vanne de régulation sur un organe de réglage de la vanne de régulation, sur la barre de réglage (5) étant fixé un point de référence (54), qui est déplaçable à l'aide de la barre de réglage (5) de la valeur d'une amplitude de course (h) entre un premier point d'inversion, qui correspond à une position de fermeture de l'organe de réglage et un deuxième point d'inversion, qui correspond à une position d'ouverture maximum de l'organe de réglage, une structure d'appui (13), telle qu'une culasse, destinée à fixer l'actionneur de réglage sur un corps de vanne recevant l'organe de réglage de la vanne de régulation (5), un dispositif de capteurs (1) selon l'une quelconque des revendications précédentes, placé de manière stationnaire sur la structure d'appui (5) doté d'un capteur de position (3), notamment magnéto-résistif et un bras de levier (4), déplaçable en rotation autour d'un point de rotation (31) stationnaire du dispositif de capteurs (1), destiné à transformer le déplacement en course linéaire dans un déplacement en transmission, notamment rotatoire correspondant, reproduit sur le capteur de position (3), **caractérisé en ce que** le point de rotation (31) est placé en décalage, en relation avec un point médian (m) d'une amplitude de course (h) dans la direction du premier point d'inversion.

12. Ensemble de mesure (10) selon la revendication 11, **caractérisé en ce que** le point de rotation (31) est placé avec un décalage d'au moins 5 %, notamment d'au moins 10 %, et / ou de pas plus de 30 %, notamment de pas plus de 20 %, de préférence de la valeur d'environ 15 % de l'amplitude de course (h) par rapport au point médian (m).

13. Ensemble de mesure (10) selon la revendication 11 ou 12, **caractérisé en ce que** le point de rotation (31) est placé avec un écart (a) par rapport à la barre de réglage (5), notamment par rapport au point de référence (54), de manière orthogonale à la direction de la course de pas plus de 75 %, notamment de pas plus de 66 %, de préférence d'environ 50% de l'amplitude de course (h).

14. Ensemble de mesure (10) selon l'une quelconque des revendications 11 à 13, **caractérisé en ce que** le bras de levier (4) comporte, en relation à une position neutre, dans laquelle le bras de levier (4) est orienté à la perpendiculaire de la direction de course (H), une première déviation (α), correspondant au premier point d'inversion et une deuxième déviation (β), correspondant au deuxième point d'inversion, la deuxième déviation (β) étant supérieure à la première déviation (α).

15. Ensemble de mesure (10) selon l'une quelconque des revendications 11 à 14, **caractérisé en ce que** le bras de levier (4) présente une amplitude de pivotement (γ) correspondant à l'amplitude de course (h) d'au moins 75°, notamment d'au moins 85°.

16. Procédé, destiné à monter un dispositif de capteurs (1) selon l'une quelconque des revendications 1 à 10 sur une vanne de régulation, **caractérisé en ce que** des données rapportées à la vanne de régulation, telles qu'une amplitude de course (h) de la barre de réglage (5) entre un premier point d'inversion, qui correspond à une position de fermeture de l'organe de réglage et un deuxième point d'inversion, qui correspond à une position d'ouverture maximum de l'organe de réglage k, une position du point de référence (54) sur la barre de réglage (5), des données géométriques d'une structure d'appui (13), telle qu'une culasse sont détectées pour fixer l'actionneur de réglage sur un corps de vanne recevant l'organe de réglage de la vanne de régulation

et des données rapportées au dispositif de capteurs (1), telles qu'un écart (a) entre le dispositif de capteurs (1) et la barre de réglage (5), notamment entre le point de rotation (31) et le point

**EP 4 430 331 B1**

de référence (54), au moins une longueur de levier (1), correspondant notamment au premier point d'inversion, au deuxième point d'inversion et / ou à la position neutre, au moins une déviation ($\alpha$, $\beta$) du bras de levier (4), correspondant notamment au premier point d'inversion et / ou au deuxième point d'inversion étant détectées, et une prescription de montage, basée sur les données rapportées à la vanne de régulation et sur les données rapportées au dispositif de capteurs étant déterminée,

et sur une unité d'affichage, la prescription de montage destinée à fixer le dispositif de capteurs (1) sur la vanne de régulation, notamment la structuré d'appui (1 3) étant éditée.

*Fig. 1*

*Fig. 2*

*Fig. 3*

**_Fig. 4_**

*Fig. 5*

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3844020 A1
- US 20030086470 A1
- DE 4233300 C1
- EP 2061984 B1
- DE 102020113437 B3